# EUROPEAN PATENT APPLICATION

(11) **EP 3 312 782 A1**
(43) Date of publication of application: **25.04.2018**
(21) Application number: 16195221.3
(22) Date of filing: 24.10.2016
(51) Int. Cl.: G06Q 10/06, G06Q 10/08, G06Q 10/10, G06Q 30/02

(54) **DEVICE AND METHOD FOR TARGETED ADVERTISING**

(71) Applicant: Advanced Digital Broadcast S.A., 1292 Geneva (CH)
(72) Inventor: Duber, Michal, 65-119 Zielona Gora (PL); Milek, Wojciech, 65-119 Zielona Gora (PL)
(74) Representative: Blonski, Pawel

(57) **Abstract**

A computer-implemented method for targeted advertising: receiving information regarding a start and stop time of a next advertising block present at a future time in a source audio/video data stream; receiving information regarding targeted advertisements list to be played back during the next advertising block; downloading said advertisements according to the list from an advertisements server/provider (180); setting up the start time (1001), in an audio/video block (350, 450); setting up the end time (1003), in an audio/video block (350, 450); awaiting (1004) a start of the advertisements block is started; outputting (1005) the targeted advertisements according to the targeted advertisements list; and when, the advertisement block ends, returning to playback of the source audio/video data stream (1006).

## Description

### TECHNICAL FIELD

The present disclosure relates to targeted advertising, in particular to presentation of advertisements targeted with respect to given viewer, viewers group, geolocation. More particularly, the subject matter relates to the insertion of recorded video content, such as advertisements, commercials, or other programming, into a digital video program during playback.

### BACKGROUND

With the development of modern audio/video technologies, people can instantly access large amount of content at any given time from various sources. At the same time advertisers wish to address persons interested in their products rather that a large number of persons uninterested in such products. This requires a tool that can help the advertisers to present targeted advertisements and help viewers by obviating a need to watch uninteresting advertisements.

At present, various kinds of content recommendation systems have already been applied to television, broadcast and Internet fields extensively. The design of content recommendation systems is focused on providing a best match between the available content and user needs, and the currently known systems are quite effective for this task. However, there is still a need to improve the way, in which recommended content is presented to the user.

Therefore, there is a need to improve the way in which recommended advertisements, from a plurality of sources, are presented to the user.

### SUMMARY

The present disclosure relates to a computer-implemented method for targeted advertising, comprising receiving information regarding a start and stop time of a next advertising block present at a future time in a source audio/video data stream; receiving information regarding targeted advertisements list to be played back during the next advertising block;
downloading said advertisements according to the list from an advertisements server/provider; setting up the start time, in an audio/video block; setting up the end time, in an audio/video block; awaiting a start of the advertisements block is started; outputting the targeted advertisements according to the targeted advertisements list; and when, the advertisement block ends, returning to playback of the source audio/video data stream.

Preferably, the targeted advertisements list has an associated validity period.

Preferably, the targeted advertisements list is received from a Recommendation Server, based on statistics provided by a monitoring server configured to provide, via a transmission channel, statistics about the activity of a particular user or a particular user device.

Preferably, information passed to the monitoring server may one or more of the following: demographic information on a particular user, for example location, age, gender, education, religion.

Preferably, each default advertisement, of the next advertising block present at a future time in the source audio/video data stream, is assigned to a category wherein this category is used to select said targeted advertisements.

Preferably, the start and stop time of a next advertising block are provided as Presentation Time Stamps.

Preferably, the targeted advertisements list provides only indication of advertisements and their source(s) while that the system analyses this information in order to decide which of the advertisements to download based on the current content of the local advertisements cache.

Preferably, said method is executed upon every channel change command.

Preferably, said method is executed upon every playback of a stored content.

The invention further relates to

Another object of the present invention is a computer program comprising program code means for performing all the steps of the computer-implemented method according to the present invention when said program is run on a computer.

A further object of the present invention is a computer readable medium storing computer-executable instructions performing all the steps of the computer-implemented method according to the present invention when executed on a computer.

### BRIEF DESCRIPTION OF DRAWINGS

These and other objects of the invention presented herein, are accomplished by providing a device and method for targeted advertising. Further details and features of the present invention, its nature and various advantages will become more apparent from the following detailed description of the preferred embodiments shown in a drawing, in which:
Fig. 1 presents an overview of a general content distribution system;
Fig. 2 presents an overview of a content distribution system at a user premises;
Fig. 3 presents a block diagram of a mobile device at which the content presentation system can be implemented;
Fig. 4 presents a block diagram of a set top box device at which the content presentation system can be implemented;
Fig. 5 shows sections of memory of a receiver device;
Fig. 6 presents data flow between the switch controller and the audio/video block;
Fig. 7 depicts the stream grabber in more details.
Fig. 8 depicts an audio/video block of a content player (user's device);
Fig. 9A and 9B show a process of advertisements download and presentation;
Fig. 10 shows setting up the audio/video decoder, by the controller, in order to switch advertisements during live playback;
Fig. 11 presents a method for monitoring user activity.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

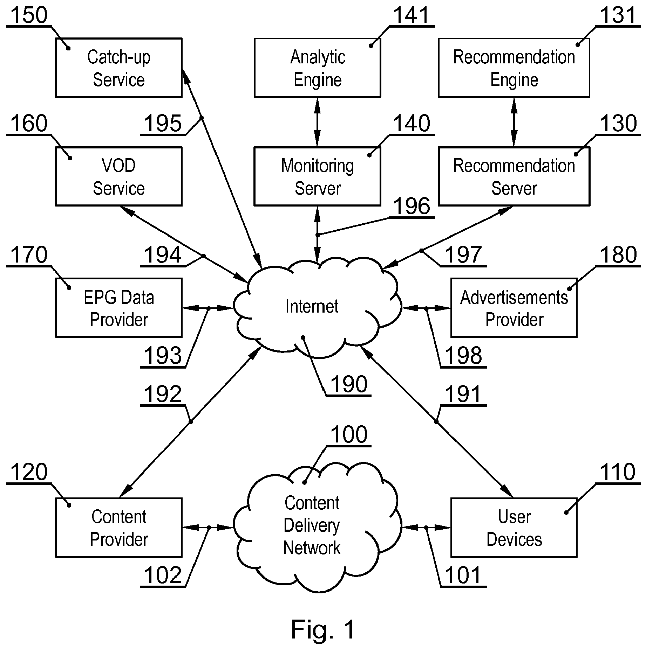

Fig. 1 presents an overview of a general content distribution system. Content can be provided to user devices 110 by various distributors from various sources. A content provider 120 may provide linear TV content, such as time-and-channel based television, live broadcasts etc., to a content delivery network 100, which may be broadcast, multicast or unicast.

The user is connected with the content delivery network via a transmission channel 101, such as a QAM, Satellite, Terrestrial, IP multicast network or other type of network. Additional services are available to the user devices 110 linked via a transmission channel 191 with the Internet 190 (or through the content provider 120 connected via a transmission channel 192 with the Internet and via a transmission channel 102 with the content delivery network 110) and include at least some of the following.

A monitoring server 140 is configured to provide, via a transmission channel 196, statistics about the activity of a particular user or a particular user device. The statistics are generated by an analytic engine 141 that operates any of the known methods to analyze user activity and draw appropriate conclusions. Information passed to the monitoring server 140 may include demographic information on a particular user, for example location, age, gender, education, religion that usually may not be accurately determined from user's activity.

A recommendation server 130 is configured to provide, via a transmission channel 197, data about content (in particular advertisements) recommended for a particular user or a particular user device, based on the statistics provided by the monitoring server 140.

The data are generated by a recommendation engine 131 that operates any of the known methods for matching content with the user's profile. In addition each default advertisement may be assigned to a category. This category may be used on select targeted advertisements, for example a generic, automotive advertisement of a give car make may be exchanged with a specific, local car dealer advertisement of the same car make. The recommendations are used to organize the presentation of content at the user device accordingly.

An advertisements server/provider 180 is configured to provide, via a transmission channel 198, advertisements data and related metadata describing the properties of respective advertisements, according to the recommendations provided by the recommendation server 140, to be executed at the user devices 110.

A catch-up service 150 is configured to provide, via a transmission channel 195, retransmission the content that has been already broadcast as linear TV, in order to allow the users to watch it a few hours or even days later.

A Video on Demand (VOD) service 160 is configured to provide, via a transmission channel 194, pre-recorded content on request.

An Electronic Program Guide (EPG) data provider is configured to provide, via a transmission channel 193, additional data about content available from various sources, including the content available from the content delivery network 100 and the other content providers 150, 160. The EPG may also present advertisements in one or more of its operating display screens.

The transmission channels 191-197 may be of any known type, such as wired or wireless, using transmission technologies suitable to carry data of a particular service.

The content provided over channels 192, 194, 195 may comprise special markers delimiting (or otherwise defining presence and location in a data stream) advertisements blocks and each of the advertisements within such block. Alternatively, all advertisements may be of equal length so that only markers delimiting advertisements blocks are sufficient.

In an alternative embodiment, each advertisements block is identified with metadata listing default advertisements of such block together with metadata relevant for each advertisement, which may comprise at least one pieces of information selected from a group comprising: length, specific subject, general category. For example, a given advertisement may be 20 seconds long and relate to a specific car maker while being assigned to an automotive general category.

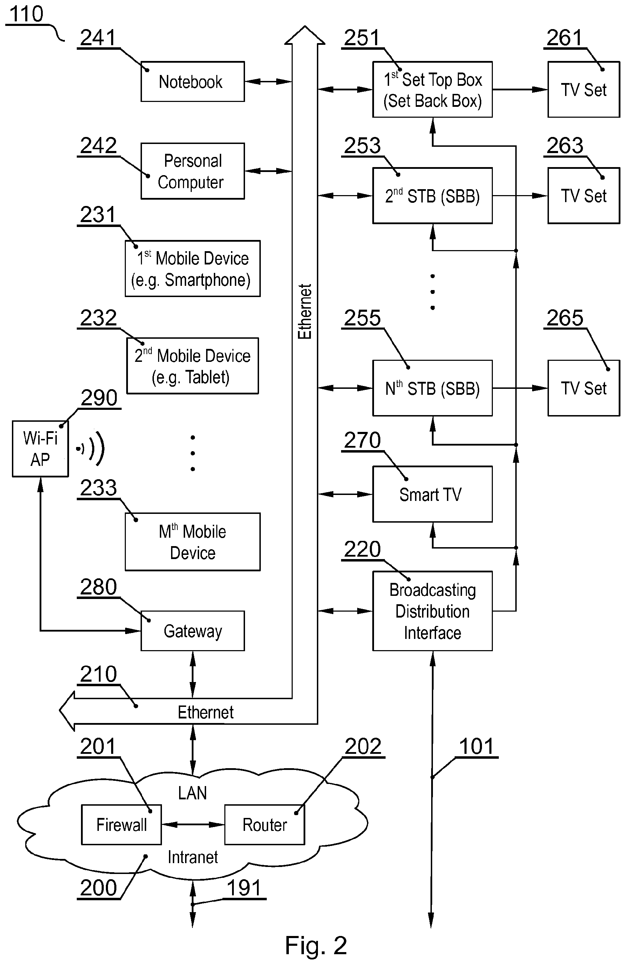

Fig. 2 presents an overview of a content distribution system at a user premises, such as at home or at an office. The user devices may be connected to an Intranet - a local area network (LAN) 200 via an interface such as Ethernet (IP) 210, which is connected with the Internet 190 via the transmission channel 191. The LAN 200 preferably includes a firewall 201 and a router 202 configured to secure and coordinate data transmission.

A gateway 280 may provide access to the Intranet 200 via a wireless access point (AP) 290, such as in Wi-Fi technology. A plurality of devices may be used in the user premises. Some of the devices may be mobile devices, such as a smartphone 231, a tablet 232 or another type of device 233. Other devices may be mobile or stationary and include devices such as a notebook computer 241, a personal computer 242, a Set Top Box (STB) or a Set Back Box (SBB) 251, 253, 255 connected to a television set 261, 263, 265, or a smart television set 270. A broadcasting distribution interface 220 may receive content from the content delivery network 100 via the transmission channel 101 and distribute it to the other devices via direct links or via the Ethernet interface.

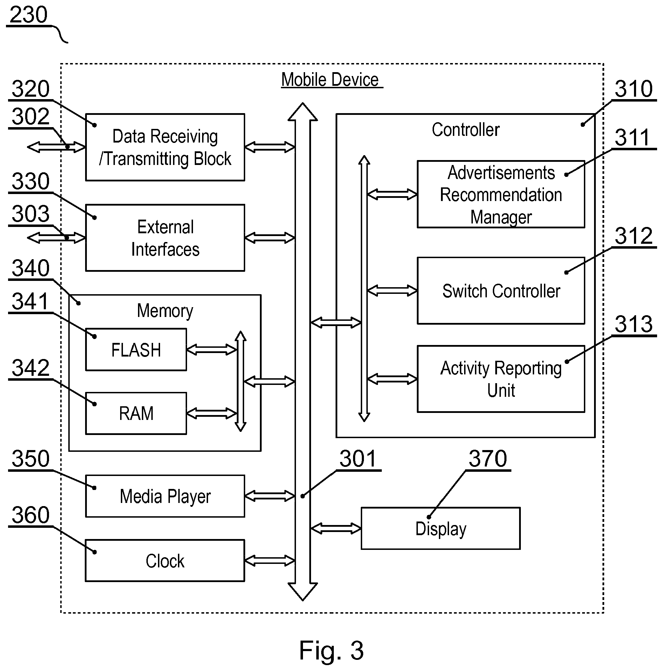

Fig. 3 presents a block diagram of a device 230, such as a tablet or smartphone, or a smart television, a notebook or a personal computer, at which the content presentation system can be implemented, and wherein mainly the elements essential for operation of the system of the invention are shown.

A data receiving/transmitting block 320 is configured to communicate, via at least one transmission channel 302, with the Ethernet (IP) network 210 or the wireless network, in order to receive content, applications and/or content recommendation data, as well as to transmit user or device statistic data. The device may further comprise external interfaces 330 to communicate, via at least one communication channel 303, with other devices or accessories.

A controller 310 comprises a plurality of units configured to provide the functionality of the system as described herein. An advertisements recommendation manager 311 is configured to communicate with the advertisements provider 180 in order to receive advertisements, to communicate with the recommendation server 130 in order to receive recommendation scores for respective advertisements.

A Switch Controller 312 is configured to exchange generic, broadcast advertisement with a local, targeted advertisement as will be shown with reference to the drawings that follow. An activity analysis unit 313 may be configured to send information about the activity of the device or a user to the aforementioned monitoring server 140.

The units may be implemented as stand-alone or embedded hardware units or as software applications. The controller 310 operates utilizing memory blocks 340, including RAM 342 and Flash 341 blocks.

A clock module 360 is configured to provide timing data necessary to report, to the monitoring server 140, the user or device activity for a particular time of day or periodically (e.g. every few hours, minutes or even seconds) and to present content available at a current time.

A media player 350 is an example of a content presentation block that is configured to decode the received content and convert it to audio/video format suitable for presentation to the user.

The mobile device 230 typically includes its own display 370 for presenting content, typically a touch-type display which thereby also functions as an input controller.

All modules of the device communicate with each other via one or more internal data buses 301.

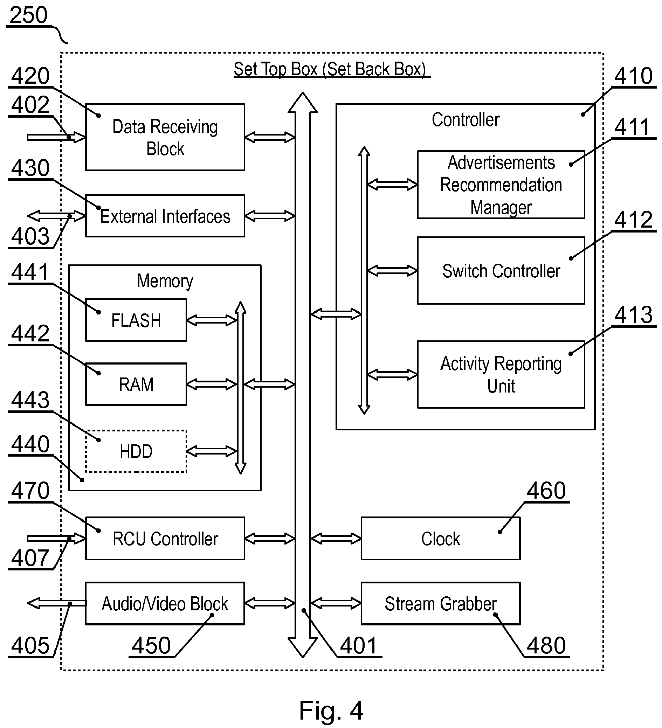

Fig. 4 presents a block diagram of a stationary device, such as a set top box or a set back box 250, at which the content presentation system can be implemented, and wherein mainly the elements essential for operation of the system of the invention are shown.

The elements 401, 410, 440, 460 are equivalent to the elements 301, 310, 340, 360 described with reference to the mobile device 230 of Fig. 3.

In addition, the memory block 440 may further comprise a hard disk drive (HDD) 443 or another type of mass storage that can be used to store video or other data locally at the device, but is not essential for its operation.

A data receiving block 420 is configured to receive downstream data, such as audio/video content, from the broadcasting distribution interface 220 via a channel 402 (101). The data receiving block 420 (also called a front-end block) may comprise a plurality of tuners (such as satellite, cable, terrestrial or IPTV tuners), wherein one of the tuners receives content to be displayed at the television screen to which the device is directly connected (e.g. the STB 251 connected to the TV set 261) and another tuner receives content to be recorded at the HDD 443.

External interfaces 430, such as the Ethernet interface, are configured to communicate, via at least one transmission channel 403, with the Ethernet (IP) network 210 or the wireless network, in order to receive applications and/or audio/video content recommendation data, as well as to transmit user or device statistic data.

The device is operable by the user via a remote control unit (RCU) that communicates, typically via a wireless transmission channel 407, with a RCU controller block 470.

An audio/video block 450 is an example of a content presentation block and configured to decode the received content, convert it to an audio/video format suitable for presentation to the user, and transmit the converted content via a transmission channel 405 to a TV set to which the device is directly connected.

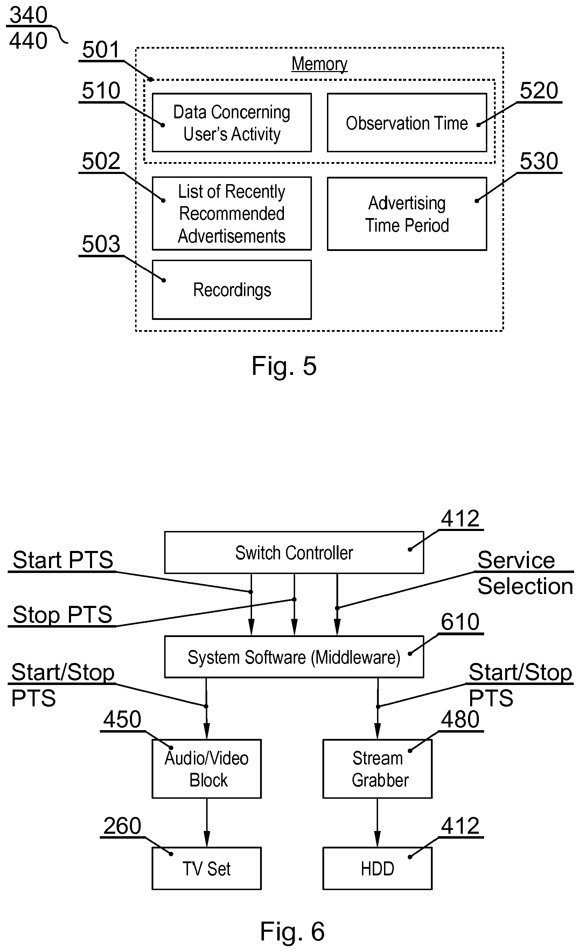

Fig. 5 presents data stored in user device memory 340, 440. Data is stored in containers, such as tables or other data types.

A data set 501 comprises data concerning user's activity 510 and optionally a configuration setting concerning observation time 520 (e.g. last week) of the user's activities. The data concerning user's activity 510 may comprise any information concerning statistical data such as frequency of access to given categories of content, top actors, top sports, top events or the like.

The list of recently recommended advertisements 502 comprises both description and data of targeted advertisements that may be shown instead of generic, broadcast advertisements.

The advertising time period 530 informs the player about a time window during which the content, from the list of recently recommended advertisements 502, is to be presented (validity). When such time window expires, the receiver will typically request another recommendation and advertising content from the Advertisements Provider 180 so that a subsequent time window may be covered with targeted advertisements, based on more recent user's activity 510.

Lastly, the memory may store user's recordings 503.

Fig. 6 presents data flow between the switch controller and the audio/video block (350, 450). The switch controller 412 is configured to exchange generic, broadcast advertisement with a local, targeted advertisement. To this end, it needs access to the targeted advertisements as well at it needs to be aware when given advertisements must be played back. Therefore, the switch controller 412 receives information on when advertisements blocks start and end. This may be effected by transmitting with the audio/video data special markers information. Such information is preferably sent sufficiently ahead of the actual advertisements block the information refers to and may have a form of a start PTS (Presentation Time Stamp as known from MPEG specifications) and an end PTS.

The switch controller 412 is also aware of a service (television channel or event or stored content) selection. This is required so that the switch controller 412 may inform the middleware regarding the upcoming one or more advertisements blocks start and end times. In case such information is readily available for a given service (television channel or event or stored content (such as a recording of a show)), it will be provided immediately or in case it is not available, it will be downloaded from a respective data stream prior to the presentation of the advertisements block. Naturally, the sooner the receiver knows about advertisements block the better.

The middleware 610 receives the information on advertisements block on a current service and instructs the audio/video block 450 to start appropriate playback or the stream grabber 480 to start appropriate signal recording.

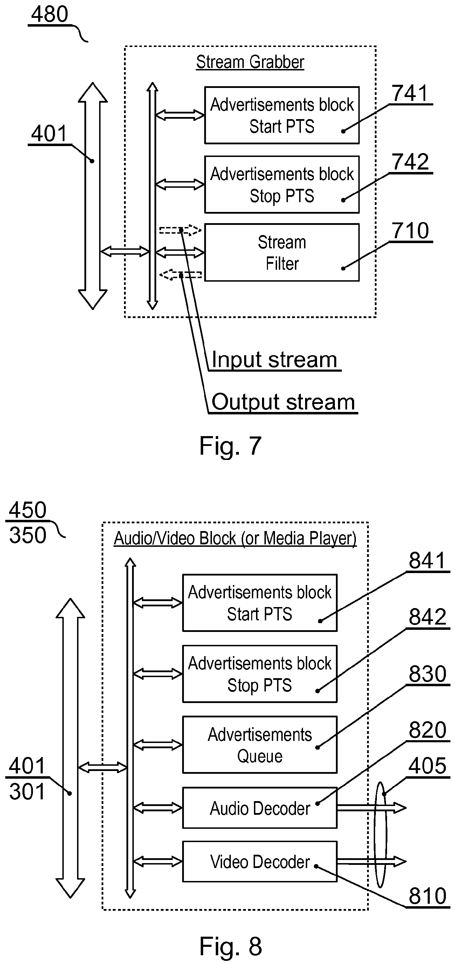

Fig. 7 depicts the stream grabber 480 in more details. Because the stream grabber 480 is responsible for storing data for later playback it preferably also stores information regarding at least one advertisements block related to the stored audio/video data. The information describes when one or more advertisements blocks start 741 and end 742. Optionally, the stream grabber 480 may store particular advertisements to be played back during the respective advertisements block. Alternatively, the advertisements may be the advertisements cached at the time of playback of the stored audio/video content or specifically downloaded prior to the playback of said audio/video content. As previously indicated, such advertisements are downloaded via the advertisements recommendation manager 411.

Fig. 8 depicts an audio/video block of a content player (user's device) 450 (350). This block plays live audio/video content by means of respective audio 820 and video 810 decoders. Further, this block may receive, from the switch controller 412 (312), data on advertisements block start 841 and end 842 on the currently played audio/video.

Further, information on advertisements queue 820 may be stored in the audio/video block 450 (350). The queue comprises information on advertisements to be played back during at least one advertisements block. This information may comprise references to advertisements content or directly the content of advertisements, depending on a preferred embodiment.

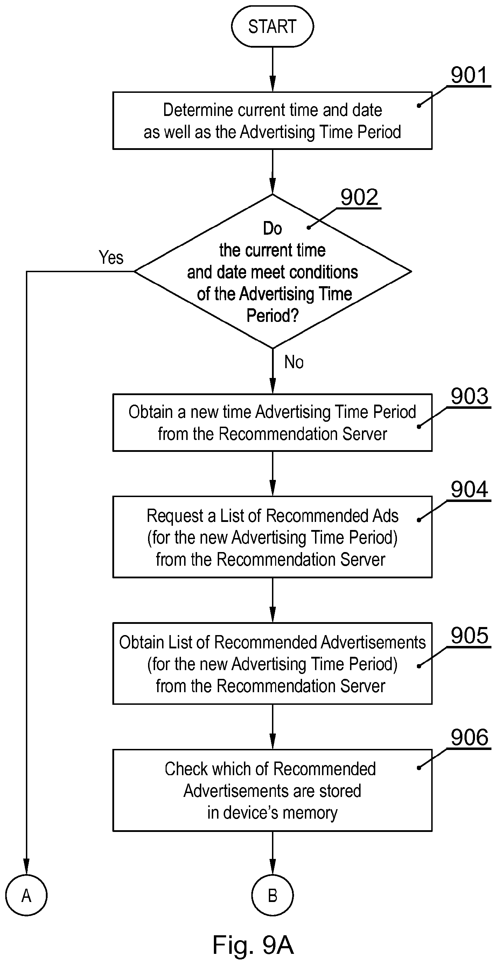

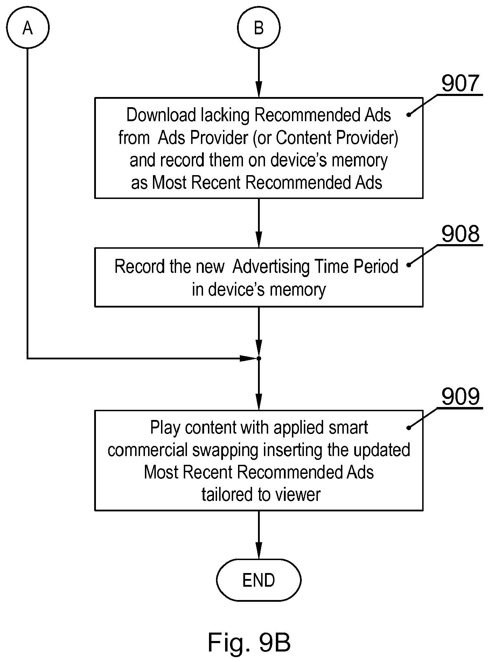

Figs. 9A and 9B show a process of advertisements download and presentation. The process starts at step 901 from determining a current time and date as well as the Advertising Time Period. The Advertising Time Period refers to validity of currently cached advertisements as defined by block 530. Next, at step 902, the system checks whether the current time and date meet conditions of the Advertising Time Period and if they do the process moves to step 909. Otherwise, the method moves to step 903 where the system obtains a new time Advertising Time Period from the Recommendation Server based on the current time and date. Preferably, the Advertising Time Period, provided by the Recommendation Server, are sequential and do not have time gaps between them.

Next, the system requests 904 a List of Recommended Advertisements (for the new Advertising Time Period) from the Recommendation Server, based on the statistics provided by the monitoring server 140. Subsequently, a List of Recommended Advertisements (for the new Advertising Time Period) is obtained 905 from the Recommendation Server. The list provides only indication of advertisements and their source(s) so that the system may analyses this information at step 906 and decide which of the advertisements to download 907 based on the current content of the local advertisements cache.

Lastly, at step 908, the system records the new Advertising Time Period in device's memory 530.

The remaining step 909 is to play content with applied smart commercial swapping inserting the updated Most Recent Recommended Ads tailored to viewer as executed by the audio/video block 450 (350).

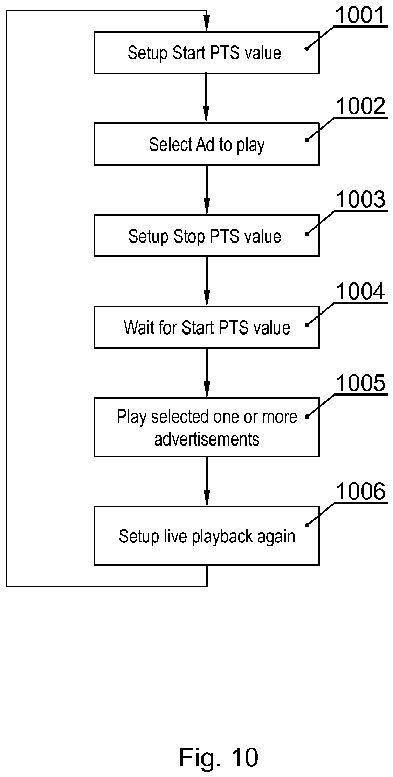

Fig. 10 shows setting up the audio/video decoder 350, 450 by the controller 310, 410 in order to switch advertisements during live playback. Naturally, switching advertisements in case of a playback from a local memory (such as HDD) will operate in substantially the same manner. Thus, both the live and locally stored content are considered a source audio/video data stream.

At step 1001 the system sets up a start PTS value in the audio/video decoder, as retrieved by the switch controller 312, 412. Next, at step 1002, the controller 310, 410 selects proper advertisements list to be played during the next advertising block. A decision regarding formation of such list can be made internally by the controller (410) or a ready to use list can be delivered from (130) the Recommendation Server.

At step 1003 the controller, based on inband or external information knows when the original advertisements block is started and sets up a stop PTS in the underlying modules 450 and 480. These modules should preferably prevent all audio/video frames, occurring before the setup stop PTS, to be displayed or delivered to the storage.

Next, the controller awaits 1005 the specific PTS to commence delivery 1006 of replacement, targeted advertisements.

When, the current advertisement block ends, preferably the controller sets up live content playback (source audio/video data stream) again 1006 and returns to step 1001 in order to prepare for the next advertisements block.

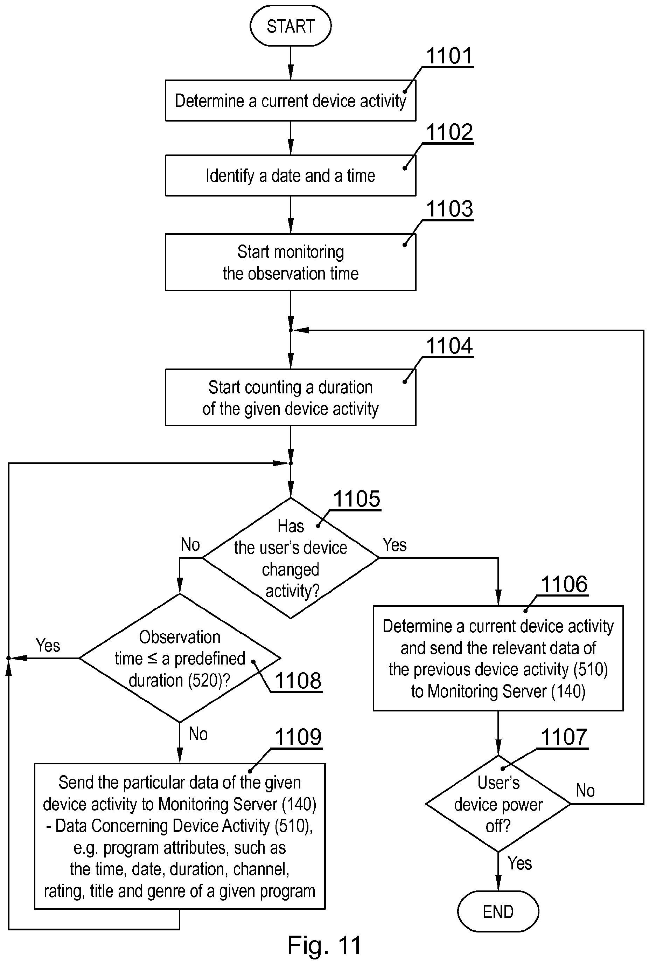

Fig. 11 presents a method for monitoring user activity. In step 1101 a current device activity is determined, e.g. device power mode, a channel to which the device is tuned, an active user, etc. A current date and time are identified from the clock module in step 1102. The observation is started in step 1103 and the duration of the particular device activity is monitored in step 1104. If it is detected in step 1105 that the device has changed its activity from the one determined in step 1101 to another one, the new activity is determined in step 1106 and the previous activity data is sent from memory 510 to the monitoring server 140. In case the device is not powered off in step 1107, the procedure returns to monitoring the current device activity. In case it is determined in step 1108 that the current activity is performed for a duration longer than a predetermined duration as defined in memory 520, the particular data of the given activity is sent from memory 510 to the monitoring server 140. The device activity data may include attributes of currently watched content, such as time, date, duration, channel, rating, title and/or genre of a given program.

The procedure of Fig. 11 can be operated continuously, periodically or upon detection of a change of device state (invoked either by the device itself or by the user issuing a command to the device).

It can be easily recognized, by one skilled in the art, that the aforementioned method for targeted advertising may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for targeted advertising, the method being **characterized in that** it comprises the step of:
• receiving information regarding a start and stop time of a next advertising block present at a future time in a source audio/video data stream;
• receiving information regarding targeted advertisements list to be played back during the next advertising block;
• downloading said advertisements according to the list from an advertisements server/provider (180);
• setting up the start time (1001), in an audio/video block (350, 450);
• setting up the end time (1003), in an audio/video block (350, 450);
• awaiting (1004) a start of the advertisements block is started;
• outputting (1005) the targeted advertisements according to the targeted advertisements list; and
• when, the advertisement block ends, returning to playback of the source audio/video data stream (1006).

2. The method according to claim 1 **characterized in that** the targeted advertisements list has an associated validity period (530).

3. The method according to claim 1 **characterized in that** the targeted advertisements list is received from a Recommendation Server (130), based on statistics provided by a monitoring server (140) configured to provide, via a transmission channel (196), statistics about the activity of a particular user or a particular user device.

4. The method according to claim 3 **characterized in that** information passed to the monitoring server (140) may one or more of the following: demographic information on a particular user, location, age, gender, education, religion.

5. The method according to claim 1 **characterized in that** each default advertisement, of the next advertising block present at a future time in the source audio/video data stream, is assigned to a category wherein this category is used to select said targeted advertisements.

6. The method according to claim 1 **characterized in that** the start and stop time of a next advertising block are provided as Presentation Time Stamps.

7. The method according to claim 1 **characterized in that** the targeted advertisements list provides only indication of advertisements and their source(s) while that the system analyses this information (906) in order to decide which of the advertisements to download (907) based on the current content of the local advertisements cache.

8. The method according to claim 1 **characterized in that** said method is executed upon every channel change command.

9. The method according to claim 1 **characterized in that** said method is executed upon every playback of a stored content.

10. A computer program comprising program code means for performing all the steps of the computer-implemented method according to claim 1 when said program is run on a computer.

11. A computer readable medium storing computer-executable instructions performing all the steps of the computer-implemented method according to claim 1 when executed on a computer.
